# EUROPEAN PATENT SPECIFICATION

(11) **EP 3 165 352 B1**
(45) Date of publication and mention of the grant of the patent: **19.08.2020**
(21) Application number: 16192147.3
(22) Date of filing: 04.10.2016
(51) Int. Cl.: B29D 30/32, B29D 30/24

(54) **POWER TRANSMISSION DEVICE OF GREEN TIRE FORMING DRUM APPARATUS**
KRAFTÜBERTRAGUNGSVORRICHTUNG EINER REIFENROHLINGFORMUNGSVORRICHTUNG
DISPOSITIF DE TRANSMISSION DE PUISSANCE D'UN TAMBOUR DE FORMATION DE PNEU VERT

(30) Priority: 09.11.2015 KR 20150156501
(43) Date of publication of application: 10.05.2017
(73) Proprietor: Hankook Tire Co., Ltd., Seoul 06133 (KR)
(72) Inventor: Kim, Ji Yun, Deokjin-gu, Jeonju-si 54938 (KR)
(74) Representative: HGF

(56) References cited:
- WO-A1-2011/019272
- WO-A1-2014/015845
- WO-A1-2014/201765
- KR-B1- 101 409 026
- KR-B1- 101 566 399
- US-A1- 2009 133 842
- US-A1- 2011 036 483
- US-A1- 2012 037 298

## Description

### BACKGROUND OF THE INVENTION

### Field of the Invention

The present invention relates to a green tire forming drum apparatus for forming a green tire, which is a semi-finished tire, in a forming process when manufacturing a tire, and more particularly, to a power transmission device of a green tire forming drum apparatus, which is capable of improving a mechanical mechanism for driving left and right forming drums and turn-up fingers to form a green tire and of precisely controlling the operation of the components, thereby improving the quality of a green tire and simplifying the green tire forming drum apparatus.

### Description of the Related Art

In general, a forming process, which is one of the tire manufacturing processes, is a process of forming a cylindrical shaped green tire (also called a green case) by sequentially winding semi-finished products, which are components used for a tire, around forming drums of a forming apparatus.

A conventional forming apparatus used in such a forming process is structured such that left and right forming drums are contracted and expanded in the radial direction by rotation of a carcass shaft, which is connected to a driving motor via a pulley and a power transmission belt such as, for example, a timing belt, and turn-up fingers are moved up and down by operation of an air cylinder.

As such, because the power transmission mechanism for rotating the forming drums and the power transmission mechanism for contracting and expanding the forming drums are separately provided, the layout and volume of the apparatus are increased, and precise control of operation of the turn-up fingers is impossible.

In order to solve this problem, Korean Patent Registration No. 10-1409026 (June 11, 2014) discloses a forming drum driving device, in which a finger shaft and a drum shaft are disposed inside a hollow main shaft, to which forming drums, which include an inside drum and an outside drum, are mounted, and movement of the inside drum and the outside drum and operation of the turn-up fingers are controlled by rotation of ball screws inside the main shaft.

KR101566399 describes a tire forming drum apparatus in which the relative positions of the opposed halves of moulding drum are controlled via co-axial shafts, connected to respective push/pull plates. The relative positions of opposed finger devices is controlled by a central finger shaft, which runs within the concentric inner and outer shafts. The finger device is controlled by ball screw nuts threaded around the finger shaft and housed within finger connectors to which the fingers are mounted. WO2011/019272 also describes a tire forming drum apparatus in which the positions of forming drum halves and folding arms are controlled via co-axial spindles.

Other power transmission devices for turn-up fingers of forming drums are disclosed in US 2009/0133842 A1, WO 2011/019272 A1 and WO 2014/015845 A1.

However, this conventional forming drum driving device has problems in that the diameter of the main shaft is increased because of the size of ball screw nuts, which are coupled to the main shaft and the finger shaft, thereby decreasing the degree of design freedom of the apparatus, and in that a position, a speed and a torque of the turn-up fingers cannot be precisely controlled during operation thereof, thereby deteriorating the quality of a green tire.

### [Cited Reference]

### [Patent Literature]

(Patent Literature 1) Korean Patent Registration No. 10-1409026 (June 11, 2014)
(Patent Literature 2) Korean Patent Publication No. 10-2011-0044200 (April 28,2011)
(Patent Literature 3) Korean Patent Registration No. 10-0895682 (April 23, 2009)

### SUMMARY OF THE INVENTION

The present invention is devised to solve the above problems, and it is an object of the present invention to provide a power transmission device of a green tire forming drum apparatus, in which rotational and lateral movement of left and right forming drums and up/down movement of turn-up fingers are achieved through a power transmission mechanism using slide keyway bodies and linear guide shafts, which are connected to ball screws configured to be driven by servomotors, thereby precisely controlling a position, a speed and a torque of the turn-up fingers and consequently improving the quality of a green tire, and in which the multiple linear guide shafts are disposed inside a rotatable carcass drum shaft, which is a main shaft of the green tire forming drum apparatus, in the axial direction of the carcass drum shaft, thereby reducing the diameter of the carcass drum shaft and consequently simplifying the apparatus.

In accordance with claim 1 of the present invention, the above and other objects can be accomplished by the provision of a power transmission device of a green tire forming drum apparatus including a carcass drum shaft, left and right forming drums mounted to the carcass drum shaft in a laterally symmetrical manner and being movable laterally in an axial direction of the carcass drum shaft, finger mounting supports for moving left and right turn-up fingers, respectively mounted to the left and right forming drums, up and down, and a driving unit for supplying power required for rotational and lateral movement of the left and right forming drums and up/down movement of the left and right turn-up fingers, the power transmission device being structured such that power generated by a lower servomotor of the driving unit is transmitted to the left and right forming drums via left and right pull/push plates connected to a ball screw, and power generated by an upper servomotor of the driving unit is transmitted to the left and right turn-up fingers via left and right pull/push plates connected to another ball screw.

Slide keyway bodies are mounted inside the hollow carcass drum shaft in a contact manner, and four linear guide shafts may be mounted inside one of the slide keyway bodies and may be arranged equiangular to each other about a center of the slide keyway body.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a schematic side view illustrating the constitution of a green tire forming drum apparatus, to which a power transmission device according to the present invention is applied;
FIG. 2A is a schematic constitutional view illustrating a power transmission mechanism of the power transmission device according to the present invention to rotate forming drums;
FIG. 2B is a schematic constitutional view illustrating a power transmission mechanism of the power transmission device according to the present invention to move forming drums laterally and to move turn-up fingers up and down;
FIG. 3 is an enlarged sectional view taken along line I-I in FIG. 2B; and
FIG. 4 is a partially enlarged sectional view of forming drums showing a green tire turn-up forming process using turn-up fingers in the present invention.

### DETAILED DESCRIPTION OF THE INVENTION

Hereinafter, preferred embodiments of the present invention will be described in detail with reference to the attached drawings. Although preferred embodiments of the present invention will be described, it will be apparent that the present invention can be practiced by those skilled in the art without being restricted or limited to the preferred embodiments.

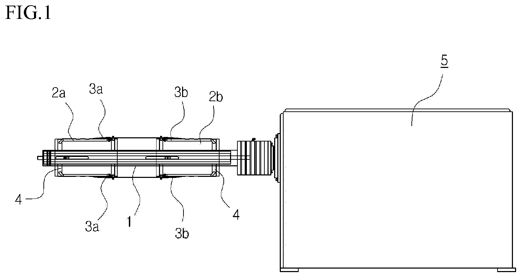

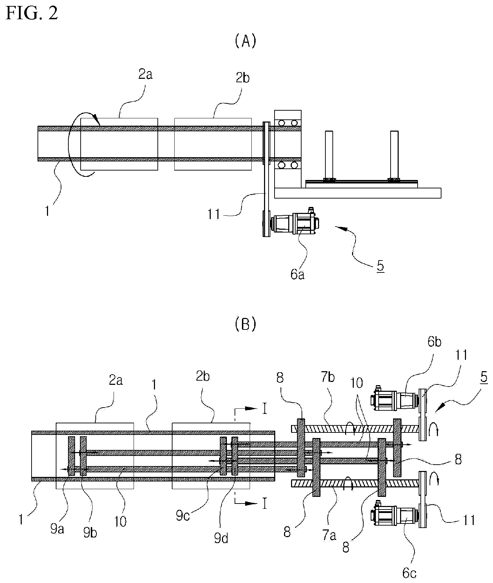

FIG. 1 is a schematic side view illustrating the constitution of a green tire forming drum apparatus, to which a power transmission device according to the present invention is applied, FIG. 2A is a schematic constitutional view illustrating a power transmission mechanism of the power transmission device according to the present invention to rotate forming drums, and FIG. 2B is a schematic constitutional view illustrating a power transmission mechanism of the power transmission device according to the present invention to move forming drums laterally and to move turn-up fingers up and down.

A green tire forming drum apparatus, to which a power transmission device is applied, comprises a carcass drum shaft 1, left and right forming drums 2a and 2b, which are mounted to the carcass drum shaft 1 in a laterally symmetrical manner and are movable laterally in the axial direction of the carcass drum shaft 1, finger mounting supports 4 for moving left and right turn-up fingers 3a and 3b, which are respectively mounted to the left and right forming drums 2a and 2b, up and down, and a driving unit 5 for supplying power required for rotational and lateral movement of the left and right forming drums 2a and 2b and up/down movement of the left and right turn-up fingers 3a and 3b. The power transmission device of this green tire forming drum apparatus is structured such that the power generated by a lower servomotor 6c of the driving unit 5 is transmitted to the left and right forming drums 2a and 2b via left and right pull/push plates 8, which are connected to a ball screw 7a, and the power generated by an upper servomotor 6b of the driving unit 5 is transmitted to the left and right turn-up fingers 3a and 3b via left and right pull/push plates 8, which are connected to another ball screw 7b.

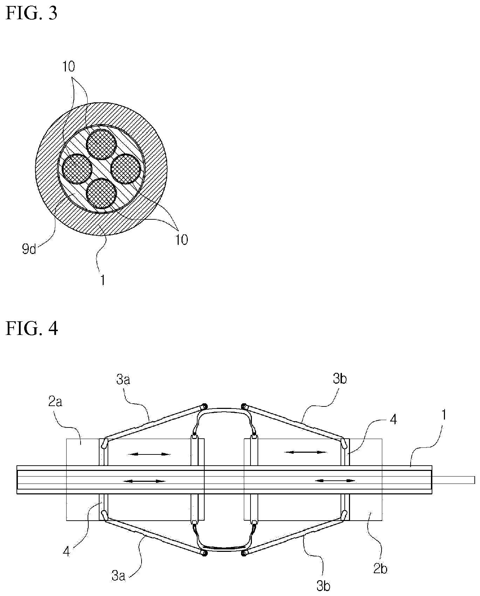

As illustrated in FIGS. 2B and 3, slide keyway bodies 9a to 9d are mounted inside the hollow carcass drum shaft 1 in a contact manner, and four linear guide shafts 10 are mounted inside the slide keyway body 9d and are arranged equiangular to each other about the center of the slide keyway body 9d.

As illustrated in FIG. 2A, a servomotor 6a is connected to the carcass drum shaft 1, which is a drum rotating shaft for simultaneously rotating the left and right forming drums 2a and 2b, through a pulley and a timing belt 11. Therefore, when the servomotor 6a operates, the carcass drum shaft 1 is rotated, and consequently the left and right forming drums 2a and 2b are rotated at the same time.

Each of the upper and lower servomotors 6b and 6c is connected to a corresponding one of the ball screws 7b and 7a through a corresponding one of pulleys and a corresponding one of timing belts 11. A pair of pull/push plates 8 is coupled to the ball screw 7a and another pair of pull/push plates 8 is also coupled to the ball screw 7b in a laterally movable manner along the axial direction of the ball screws.

Here, the four slide keyway bodies 9a to 9d are configured to independently slide inside the carcass drum shaft 1, and some slide keyway bodies 9a and 9b are coupled to the corresponding left and right forming drums 2a and 2b by means of keys.

The linear guide shafts 10 are mounted inside the slide keyway bodies 9a to 9d in a slidable manner. Rotational movement of the linear guide shafts 10 relative to the slide keyway bodies 9a to 9d is restricted, and rotational movement of the linear guide shafts 10 relative to the pull/push plates 8 is permitted.

The ball screws 7a and 7b, which are used for lateral movement of the left and right forming drums 2a and 2b and up/down movement of the left and right turn-up fingers 3a and 3b, are arranged such that the spiral threads of the ball screw 7a have an orientation opposite to the spiral threads of the ball screw 7b.

The operation of the green tire forming drum apparatus, to which the power transmission device according to the present invention is applied, will now be explained with reference to the drawings.

First, semi-finished products for manufacturing a tire are wound around the left and right forming drums 2a and 2b in the green tire forming drum apparatus depicted in FIG. 1. At this time, as illustrated in FIG. 2A, the rotating force generated by the servomotor 6a is transmitted to the carcass drum shaft 1 via the pulley and the timing belt 11, and accordingly the left and right forming drums 2a and 2b, which are arranged in a laterally symmetrical manner about the middle point in the axial direction of the carcass drum shaft 1, are rotated so that the semi-finished products are sequentially wound around the left and right forming drums 2a and 2b according to the manufacturing procedures.

That is, the power for rotating the left and right forming drums 2a and 2b is transmitted as follows: the servomotor 6a → the pulley → the timing belt 11 → the carcass drum shaft 1 → the left and right forming drums 2a and 2b.

On the other hand, with regard to lateral movement of the finger mounting supports 4 for generating lateral movement of the left and right forming drums 2a and 2b and for generating up/down movement of the left and right turn-up fingers 3a and 3b, as indicated by the arrows in FIG. 4, the rotating force generated by each of the upper and lower servomotors 6b and 6c is transmitted to a corresponding one of the ball screws 7b and 7a via a corresponding one of the pulleys and a corresponding one of the timing belts 11, and the pull/push plates 8 are moved in the directions of the arrows in FIG. 2B. Accordingly, the linear guide shafts 10 and the slide keyway bodies 9a to 9d are moved laterally, and consequently the finger mounting supports 4 are moved laterally in order to move the left and right forming drums 2a and 2b laterally and to move the left and right turn-up fingers 3a and 3b up and down.

That is, the power for moving the left and right forming drums 2a and 2b laterally and for moving the left and right turn-up fingers 3a and 3b up and down is transmitted as follows: the upper and lower servomotors 6b and 6c → the pulleys → the timing belts 11 → the ball screws 7a and 7b → the pull/push plates 8 → the linear guide shafts 10 → the slide keyway bodies 9a to 9d → the left and right forming drums 2a and 2b and the left and right turn-up fingers 3a and 3b.

At this time, the slide keyway bodies 9a to 9d slide in the hollow carcass drum shaft 1, and one of the linear guide shafts 10, which are mounted in four holes formed in the slide keyway body 9d, is fixed, and the remaining linear guide shafts perform sliding movement.

Only one of the linear guide shafts 10, which are located at positions equidistant from the center of the carcass drum shaft 1 and are arranged equiangular to each other, is mounted to the slide keyway bodies 9a to 9d in a fixed manner, and the remaining linear guide shafts 10 are mounted to the slide keyway bodies 9a to 9d in a slidable manner. For example, as illustrated in FIG. 2B, only the uppermost linear guide shaft 10 is fixed to the first slide keyway body 9d from the right side, and the remaining three linear guide shafts perform sliding movement. Three linear guide shafts 10 are mounted to the second slide keyway body 9c from the right side. Only the intermediate linear guide shaft is fixed to the second slide keyway body 9c from the right side, and the remaining two linear guide shafts perform sliding movement.

Two linear guide shafts 10 are mounted to the second slide keyway body 9b from the left side, one of which is fixed to the second slide keyway body 9b from the left side, and the other of which performs sliding movement. Only one linear guide shaft 10 is fixed to the first slide keyway body 9a from the left side.

As such, movement of each of the linear guide shafts 10 is restricted by a corresponding one of the slide keyway bodies 9a to 9d, and a bundle of four linear guide shafts 10 can perform rotating movement inside the carcass drum shaft 1 and the pull/push plates 8.

As described above, the rotational and lateral movement of the left and right forming drums and the up/down movement of the left and right turn-up fingers may be precisely controlled at the same time using the multiple linear guide shafts, which are disposed inside the single rotatable carcass drum shaft and are connected to the servomotors, thereby forming a high quality green tire.

As is apparent from the above description, the present invention provides a power transmission device of a green tire forming drum apparatus, which is capable of controlling a position, a speed and a torque of left and right turn-up fingers more precisely than a conventional power transmission device, which drives left and right turn-up fingers using an air cylinder, thereby improving the quality of a green tire, and is capable of reducing the diameter of a carcass drum shaft, which is a drum rotating shaft, thereby decreasing the layout of the apparatus and increasing the degree of design freedom of the apparatus.

Although a preferred embodiment of the present invention has been shown and described, it would be appreciated by those skilled in the art that changes may be made in this embodiment without departing from the invention, the scope of which is defined in the claims and their equivalents.

## Claims

1. A power transmission device of a green tire forming drum apparatus including a carcass drum shaft (1), left and right forming drums (2a, 2b) mounted to the carcass drum shaft (1) in a laterally symmetrical manner and being movable laterally in an axial direction of the carcass drum shaft, finger mounting supports (4) for moving left and right turn-up fingers (3a, 3b), respectively mounted to the left and right forming drums (2a, 2b), up and down, and a driving unit (5) for supplying power required for rotational and lateral movement of the left and right forming drums and up/down movement of the left and right turn-up fingers, wherein
power generated by a lower servomotor (6c) of the driving unit (5) is transmitted to the left and right forming drums (2a, 2b) via left and right pull/push plates (8) connected to a ball screw (7a), and
power generated by an upper servomotor (6b) of the driving unit (5) is transmitted to the left and right turn-up fingers (3a, 3b) via left and right pull/push plates (8) connected to another ball screw (7b); and
wherein slide keyway bodies (9a, 9b, 9c, 9d) are mounted inside the carcass drum shaft (1) in a contact manner, and four linear guide shafts (10) are mounted inside one of the slide keyway bodies (9d) and are arranged equiangular to each other about a center of the slide keyway body.

2. The power transmission device according to claim 1, wherein the four slide keyway bodies (9a, 9b, 9c, 9d) are mounted inside the carcass drum shaft (1) in an independently slidable manner, and some of the slide keyway bodies (9b, 9c) are coupled to the left and right forming drums (2a, 2b) corresponding thereto by means of keys.

3. The power transmission device according to claim 1, wherein the linear guide shafts (10) are mounted inside the slide keyway bodies (9a, 9b, 9c, 9d) in a slidable manner, and
wherein rotational movement of the linear guide shafts (10) relative to the slide keyway bodies (9a, 9b, 9c, 9d) is restricted, and rotational movement of the linear guide shafts (10) relative to the pull/push plates (8) is permitted.

## Patentansprüche

1. Kraftübertragungsvorrichtung einer Reifenrohlingformungsvorrichtung, enthaltend eine Karkassentrommelwelle (1), linke und rechte Formungstrommeln (2a, 2b), die an die Karkassentrommelwelle (1) auf eine laterale symmetrische Weise montiert und lateral in einer Axialrichtung der Karkassentrommelwelle beweglich sind, Fingermontagestützen (4) zum Bewegen linker und rechter Umschlagfinger (3a, 3b), die jeweils an den linken und rechten Formungstrommeln (2a, 2b) montiert sind, nach oben und nach unten, und eine Antriebseinheit (5) zum Zuführen von Kraft, die für die rotierende und laterale Bewegung der linken und rechten Formungstrommeln und die Bewegung nach oben/nach unten der linken und rechten Umschlagfinger erforderlich ist,
wobei von einem unteren Servomotor (6c) der Antriebseinheit (5) erzeugte Kraft über linke und rechte Zug-/Schubplatten (8), die mit einer Kugelspindel (7a) verbunden sind, auf die linken und rechten Formungstrommeln (2a, 2b) übertragen wird, und
von einem oberen Servomotor (6b) der Antriebseinheit (5) erzeugte Kraft über linke und rechte Zug-/Schubplatten (8), die mit einer weiteren Kugelspindel (7b) verbunden sind, auf die linken und rechten Umschlagfinger (3a, 3b) übertragen wird; und
wobei Gleitnutkörper (9a, 9b, 9c, 9d) in der Karkassentrommelwelle (1) auf Kontaktweise montiert sind und vier lineare Führungswellen (10) in einem der Gleitnutkörper (9d) montiert und gleichwinklig zueinander um eine Mitte des Gleitnutkörpers angeordnet sind.

2. Kraftübertragungsvorrichtung nach Anspruch 1, wobei die vier Gleitnutkörper (9a, 9b, 9c, 9d) in der Karkassentrommelwelle (1) auf eine unabhängig gleitbare Weise montiert sind und einige der Gleitnutkörper (9b, 9c) mit den linken und rechten Formungstrommeln (2a, 2b), die ihnen mittels Nuten entsprechen, gekoppelt sind.

3. Kraftübertragungsvorrichtung nach Anspruch 1, wobei die linearen Führungswellen (10) in den Gleitnutkörpern (9a, 9b, 9c, 9d) auf gleitbare Weise montiert sind und wobei eine rotierende Bewegung der linearen Führungswellen (10) relativ zu den Gleitnutkörpern (9a, 9b, 9c, 9c) eingeschränkt wird und eine rotierende Bewegung der linearen Führungswellen (10) relativ zu den Zug-/Schubplatten (8) zugelassen wird.

## Revendications

1. Dispositif de transmission de puissance d'un appareil à tambour de formation de pneu vert comprenant un arbre de tambour de carcasse (1), des tambours de formation gauche et droit (2a, 2b) montés sur l'arbre de tambour de carcasse (1) de manière symétrique latéralement et pouvant se déplacer latéralement dans un direction axiale de l'arbre de tambour de carcasse, des supports de montage de doigts (4) destinés à déplacer les doigts de retournement gauche et droit (3a, 3b), montés respectivement sur les tambours de formation gauche et droit (2a, 2b), vers le haut et vers le bas, et un unité d'entraînement (5) destinée à fournir la puissance requise pour le mouvement de rotation et latéral des tambours de formation gauche et droit et le mouvement haut/bas des doigts de retournement gauche et droit,
ladite puissance générée par un servomoteur inférieur (6c) de l'unité d'entraînement (5) étant transmis aux tambours de formation gauche et droit (2a, 2b) par l'intermédiaire des plaques de traction/poussée gauche et droite (8) reliées à une vis à billes (7a), et ladite puissance générée par un servomoteur supérieur (6b) de l'unité d'entraînement (5) étant transmise aux doigts de retournement gauche et droit (3a, 3b) par l'intermédiaire de plaques de traction/poussée gauche et droite (8) reliées à une autre vis à billes (7b) ; et
lesdits corps de rainure de clavette coulissante (9a, 9b, 9c, 9d) étant montés à l'intérieur de l'arbre de tambour de carcasse (1) de manière à être en contact, et quatre arbres de guidage linéaires (10) étant montés à l'intérieur de l'un des corps de rainure de clavette coulissante (9d) et étant agencés de manière à présenter des angles égaux les uns par rapport aux autres autour d'un centre du corps de rainure de clavette coulissante.

2. Dispositif de transmission de puissance selon la revendication 1, lesdits quatre corps de rainure de clavette coulissante (9a, 9b, 9c, 9d) étant montés à l'intérieur de l'arbre de tambour de carcasse (1) de manière à pouvoir coulisser indépendamment, et certains des corps de rainure de clavette coulissante (9b, 9c) étant couplés aux tambours de formation gauche et droit (2a, 2b) qui leur correspondent au moyen de clés.

3. Dispositif de transmission de puissance selon la revendication 1, lesdits arbres de guidage linéaires (10) étant montés à l'intérieur des corps de rainure de clavette coulissante (9a, 9b, 9c, 9d) de manière à pouvoir coulisser, et ledit mouvement de rotation des arbres de guidage linéaires (10) par rapport aux corps de rainure de clavette coulissante (9a, 9b, 9c, 9d) étant limité et ledit mouvement de rotation des arbres de guidage linéaires (10) par rapport aux plaques de traction/poussée (8) étant autorisé.
